# EUROPEAN PATENT SPECIFICATION

(11) **EP 0 296 767 B1**
(45) Date of publication and mention of the grant of the patent: **19.10.1994**
(21) Application number: 88305542.8
(22) Date of filing: 17.06.1988
(51) Int. Cl.: G06F 11/14

(54) **Data back-up system**
Datenreservesystem
Système de réserve de données

(30) Priority: 18.06.1987 JP 150131/87
(43) Date of publication of application: 28.12.1988
(73) Proprietor: KABUSHIKI KAISHA TOSHIBA, Kawasaki-shi, Kanagawa-ken 210 (JP)
(72) Inventor: Makino, Tetsuo C/o Patent Division, 1-1 Shibaura 1-chome Minato-ku Tokyo (JP)
(74) Representative: BATCHELLOR, KIRK & CO.

(56) References cited:
- EP-A- 0 196 838
- GB-A- 1 178 653
- US-A- 4 323 987
- US-A- 4 618 953

## Description

The present invention relates to an apparatus for storing back-up data or an information processing system such as a lap-top computer, a personal computer or the like, hereinafter referred to generally as a computer.

In general, even if the electric power is cut off from the computer by the power switch turning off or for some other reason, data such as initial values operating system information and so on may be held in storage within the information processing system. Such data is referred to as back-up data in the present application. For this purpose the computer has a non-volatile memory including a dry battery or other suitable power source to maintain the back-up data stored. As the technology of semiconductor integrated circuits has progressed, including the development of LSIs for use in printed circuit boards (hereinafter referred to as PCBs), these boards have become smaller in size, and the entire chassis of the machine containing such PCBs has also become more compact. The market has also required further increased compactness thus increasing the demand for ever higher levels of integration.

However, the demand for increased functional capability conflicts with the need for reduced size. In order to increase the functional capability of the computer, the number of LSIs normally must be increased, and this leads to an increase in the size of the PCB. Thus, in order for the computer to have both a higher functional capability and greater compactness, the hardware of the circuitry on the PCB should preferably be simplified, and the area of the PCB should be utilised more efficiently.

However, as described above, in a computer using a permanent memory for back-up data the memory and its decoder occupy an appreciable area on the PCB, making it larger.

In view of the foregoing, the present invention as claimed in claim 1 seeks to provide an apparatus for storing back-up data in a computer which eliminates the need for the non-volatile memory and its decoder as in the conventional system described above, and thus make the PCB smaller, or adding LSIs for higher functional capability.

The system of US-A-4 618 953 has been used as a basis for the preamble fo claim 1.

The present invention relates particularly to systems which incorporate an auxiliary micro-processor which controls an auxiliary device such as a keyboard.

Such an auxiliary processor is referred to hereinafter as an "auxiliary function processor". Its memory is normally backed up by a battery. In the preferred embodiment of the present invention an auxiliary processor formed as a single LSI chip and intended for controlling the keyboard originally, is employed to control the storage of the back-up data. Since the present invention may thus eliminate the requirement for a separate memory and decoder for the back-up data, required by the prior art described above, the PCB of the computer may be made smaller, or LSIs for other functions may be provided on the PCB in place of the memory and its decoder.

One embodiment of the invention will now be described by way of example with reference to the accompanying drawings, in which:
Figure 1 is a block diagram of an apparatus for storing back-up data of a computer in accordance with the present invention;
Figure 2 is a block diagram representing a sequence of processing steps stored in a ROM;
Figure 3 is a flow chart representing steps for controlling the computer keyboard; and
Figure 4 is a flow chart representing a sequence of operations for checking data and for receiving or transmitting data.

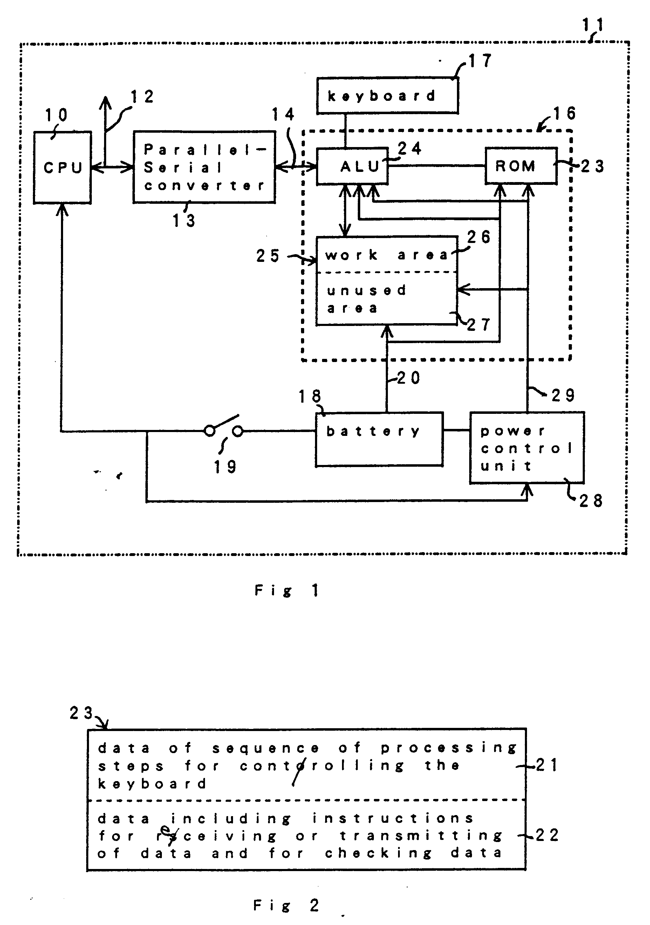

With reference to the drawings, a CPU 10 (for example, an IC8088 marketed by Intel) connected to a system bus 12 controls a computer 11. A Parallel-Serial converter 13 is connected to the system bus 12. An LSI microcomputer 16 for controlling a keyboard 17 is connected to the Parallel-Serial converter 13 through a serial line 14. Signals from the keyboard 17 are processed by the microcomputer 16. Electric power from a battery 18 is supplied to the CPU 10 and other parts of the information processing system 11 through a power switch 19. The microcomputer 16 is connected to the battery 18 directly through a power supply line 20 bypassing the switch and thus, even if the switch is turned off, the microcomputer 16 is backed up by the battery 18. The microcomputer 16, which is formed of a single LSI chip of CMOS type (for example an IC80C50 of Toshiba) comprises a ROM 23, an ALU (arithmetic logical unit) 24, and RAM 25. As shown in in Figure 2, the ROM 23 includes data 21 for controlling the keyboard 17, and data 22 including instructions for receiving or transmitting of data and checking data. The ALU 24 executes sequences of steps at the data 21, 22 in the ROM 23. The RAM 25 has a work area 26 for the ALU 24 and an unused area 27. The back-up data of the information processing system 11 includes initial values, operation mode information and so on.

The back-up data is stored in the unused area 27 within the RAM 25 of the microcomputer 16. When the power switch 19 is turned off, a power control unit 28 detects the condition of the power switch 19, and a stand-by signal from the power control unit 28 is supplied to the microcomputer 16 through a stand-by signal line 29. This changes the impedance of the microcomputer 16 to a high level so as to inhibit inputs from other outside source. The RAM 25 changes to an inhibit state so that data from the CPU 10 cannot be stored therein.

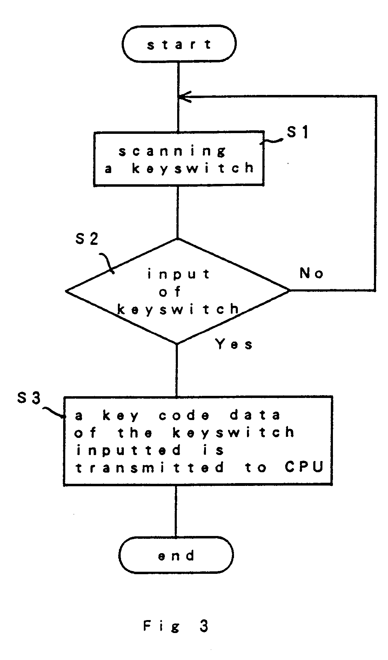

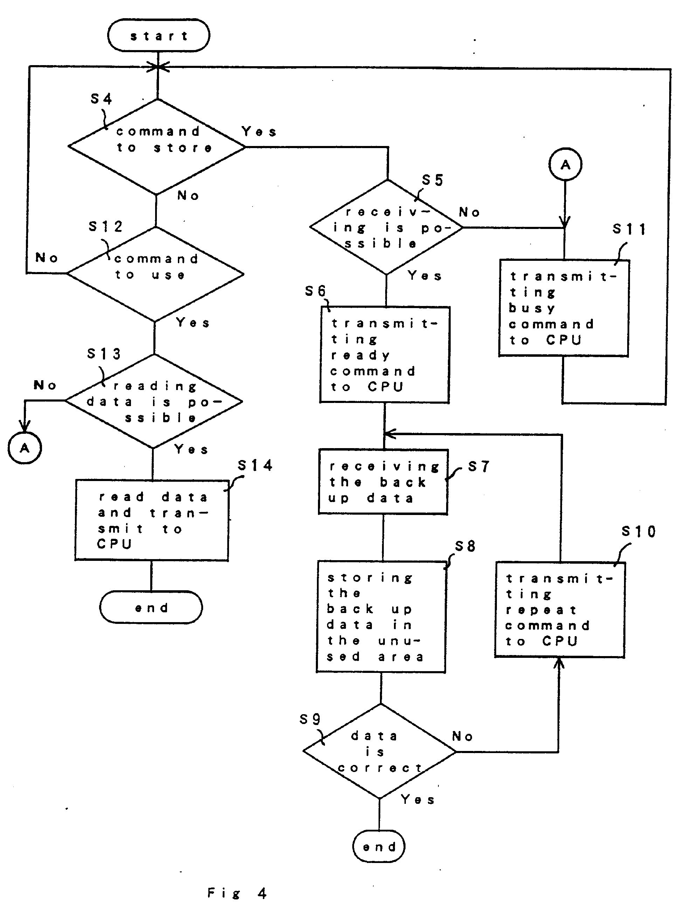

Referring to Figure 3 and Figure 4 in normal operation the microcomputer 16 controls the keyboard 17. This depends on ALU 24 executing the instructions at the data 21 to control the keyboard 17 as represented by the flow chart shown as Figure 3. The microcomputer 16 scans a keyswitch (not shown) of the keyboard 17 in step S1, and it is decided whether the keyswitch has been activated in step S2. When a keyswitch has been activated, the process is advanced to a subsequent step S3 at which the keycode data of the activated keyswitch is transmitted to the CPU 10 through serial signal line 14, the Parallel-serial converter 13, and the system bus 12 by the microcomputer 16.

The operation of storing the back-up data into the unused area 27, and checking the back-up data is represented by the flow chart shown in Figure 4. All of these steps are executed by the ALU 24 as an "interrupt" process. The operation of storing back-up data into the unused area 27 is as follows:

An address signal of the Parallel-Serial converter 13 from the CPU 10 is transmitted to the system bus 12. The Parallel-serial converter 13 is enabled, and then a command to store the back-up data into the unused area 27 is transmitted to the system bus 12 from the CPU 10. Then command signal is then converted into a serial signal by the Parallel-Serial converter 13. Finally, the command serial signal is transmitted to the microcomputer 16. The microcomputer 16 upon receiving the command to store the back-up data, judges whether the command is to store the back-up data in the step S4. If the command is to store the back-up data, the process is advanced to a subsequent step S5. Then the ALU 24 judges whether the microcomputer 16 can receive the back-up data. When this is possible the process is advanced to step S6. In the step S6, the serial signal representing the "ready" state is transmitted to the serial signal line 14 from the microcomputer 16. This signal is converted into a parallel signal by the Parallel-Serial converter 13, and the parallel signal is supplied to the CPU 10 through the system bus 12.

When the CPU 10 receives the signal representing the "ready" state the back-up data of the information system 11 is transmitted to the system bus 12 from the CPU 10. The back-up data is converted into a serial signal by the Parallel-Serial converter 13. This serial signal is transmitted to the microcomputer 16 through the serial signal line 14. The microcomputer 16 receives the back-up data at step S7, and the process is advanced to step S8. The ALU 24 stores the back-up data into the unused area 27 in the RAM 25 at the step S8.

Furthermore, the ALU 24 checks whether the back-up data stored in the unused area 27 of the RAM 25 is correct in step S9. If the back-up data is not correct, the process advances to a subsequent step S10. The microcomputer 16 transmits a repeat command to the CPU 10 at the step S10. The CPU 10 receives the repeat command, and the CPU 10 then transmits the back-up data to the microcomputer 16. The microcomputer 16 receives the back-up data in a manner similar to the step S7. At the step S5, when the microcomputer 16 is not able to receive the back-up data, the process is advanced to a step S11. The ALU 24 transmits a serial signal representing a "busy" state from the microcomputer 16 to the serial signal line 14 in the step S11. This signal is converted into a parallel signal by the serial Parallel converter 13. This parallel signal is transmitted to the CPU 10 through the system bus 12. When the ALU 24 transmits the "busy" signal, the process advances to the step S4. To use the back-up data which has been stored in the unused area 27 of the RAM 25, the address signal of the Parallel-serial converter 13 from the CPU 10 is transmitted to the system bus 12. The Parallel-serial converter 13 is enabled, and then a command to use the backup data is transmitted to the system bus 12 from the CPU 10. The command signal is converted into a serial signal by the Parallel-Serial converter 13. Finally, the command serial signal is transmitted to the microcomputer 16. In step S12, the microcomputer 16, upon receiving the command serial signal, judges whether the command is to use the back-up data. If the command is to use the back-up data, the process is advanced to a subsequent step S13. At step S13 the ALU 24 then judges whether the microcomputer 16 is ready to read the back-up data. When this is possible, the process is advance to a step S14. At the step S14, the ALU 24 reads the back-up data stored in the unused area 27. Then the ALU 24 transmits the back-up data in the form of a serial signal to the serial signal line 14, and the serial signal is converted into a parallel signal by the Parallel-Serial converter 13. This parallel signal is transmitted to the CPU 10.

On the other hand, if the microcomputer 16 cannot read the back-up data at step S13, the ALU 23 transmits the signal representing the ready state to the CPU 10 in a manner similar to the step S11, as described above. In the manner as stated above, the back-up data from the CPU 10 is transmitted to the microcomputer 16, and then the back-up data is stored in the unused area 27 of the RAM 25 within the microcomputer 16.

When the back-up data is used, the back-up data stored in the unused area 27 is transmitted from the microcomputer 16 to the CPU 10. Even if electric power is cut off, since the microcomputer 16 is connected directly to the battery 18 through the power supply line 20, the back-up data which has been stored in the unused area 27 is maintained in storage because of the back-up of battery power source 18. Accordingly, the internal memory for storing the back-up data which is required in conventional system may be eliminated according to the present invention. In the preferred embodiment as described above, the back-up data of the information processing system 11 is stored in the microcomputer 16, which is employed as an input device process means. Another function process means (not shown), such as a printer controller, a magnetic disk controller or a CRT controller could also be employed.

If such another function process means is employed the other function process means must of course have an unused memory area for back-up data to be stored, and must be provided with a program with a sequence of steps including operations for receiving and transmitting data and for checking data such as represented by the flow chart shown as Figure 4.

Furthermore, in the embodiment as described above, the battery 18 is also used as an electric power source of the information processing system. A direct current rectified from an alternating current also may be employed as the electric power source. The present invention may thus be embodied in various forms within the scope of the appended claims.

## Claims

1. Apparatus for storing back-up data in a computer (11) comprising
a central processing unit (10),
an auxiliary function processor (16) including a auxiliary processing unit (24) and a volatile memory (25) having a work area (26) normally used by the auxiliary processing unit (24) and an unused area (27) which is not normally used by the auxiliary processing unit (24), the auxiliary function processor (16) being electrically connected to the central processing unit (10) for receiving and transmitting data,
a peripheral device (17) controlled by the auxiliary function processor (16), and
a battery for supplying back-up power to the volatile memory while the main power supply is cut off,
characterised in that the auxiliary processing unit (24) includes
detecting means for detecting a command for storing back-up data supplied from the central processing unit (10),
deciding means for deciding whether the auxiliary function processor can receive the back-up data,
receiving means for receiving the back-up data from the central processing unit (10) when the deciding means decides that reception is possible, and
storing means for storing the back-up data received by the receiving means into the unused area (27) of the volatile memory (25).

2. Apparatus according to claim 1 wherein the volatile memory (25) is a random access memory (25) having a work area (26) and an unused area (27) which is not normally used for storing data during normal information processing; the auxiliary processing unit (24) further comprising a read only memory (23) including a program having instructions for receiving and transmitting of data, and being arranged to determine whether the unused area (27) of the random access memory (25) can be accessed for receiving the back-up data and if so, to generate a control signal, which causes the back-up data to be stored in the unused area (27).

3. Apparatus according to claim 1 or claim 2 characterised in that the auxiliary processing unit (24) further includes means for outputting a ready signal to the central processing unit (10) when the deciding means decides that reception is possible, and in which the central processing unit (10) sends the back-up data to the auxiliary processing unit (24) after reception of the ready signal.

4. Apparatus according to any preceding claim further characterised in that the auxiliary processing unit (24) includes means for outputting a busy signal to the central processing unit (10) when the deciding means decides that reception is not possible.

5. Apparatus according to any preceding claim further characterised in that the auxiliary processing unit (24) includes means for checking whether the received back-up data is correct, means for sending a repeat command to the central processing unit (10) when the checking means determines that the received back-up data is not correct, so that the central processing unit (10) transmits the back-up data again.

## Patentansprüche

1. Vorrichtung zur Speicherung von Sicherungsdaten in einem Computer (11) mit
einer Zentraleinheit (10),
einem Hilfs-Funktionsprozessor (16), der eine Hilfs-Prozeßeinheit (24) und einen flüchtigen Speicher (25) mit einem Arbeitsbereich (26), der normalerweise von der Hilfs-Prozeßeinheit (24) verwendet wird, und einem ungenutzten Bereich (27) aufweist, der normalerweise nicht von der Hilfs-Prozeßeinheit (24) verwendet wird, wobei der Hilfs-Funktionsprozessor (16) mit der Zentraleinheit (10) elektrisch verbunden ist, um Daten zu empfangen und zu übertragen,
einer Peripherie-Vorrichtung (17), die durch den Hilfs-Funktionsprozessor (16) gesteuert wird, und mit
einer Batterie, um den flüchtigen Speicher mit Ersatz-Energie zu versorgen, wenn die Hauptenergieversorgung abgeschaltet ist,
dadurch gekennzeichnet, daß die Hilfs-Prozeßeinheit (24) aufweist
Detektoreinrichtungen zum Erfassen eines Befehls zur Speicherung von Sicherungsdaten, die von der Zentraleinheit (10) geliefert werden,
Entscheidungseinrichtungen zum Bestimmen, ob der Hilfs-Funktionsprozessor die Sicherungsdaten empfangen kann,
Empfangseinrichtungen zum Empfangen der Sicherungsdaten von der Zentraleinheit (10), wenn die Entscheidungseinrichtungen bestimmen, daß ein Empfang möglich ist, und
Speichereinrichtungen zum Speichern der Sicherungsdaten, die durch die Empfangseinrichtungen empfangen werden, im ungenutzten Bereich (27) des flüchtigen Speichers (25).

2. Vorrichtung nach Anspruch 1, wobei der flüchtige Speicher (25) ein RAM (25) mit einem Arbeitsbereich (26) und einem ungenutzten Bereich (27) ist, der normalerweise während der normalen Datenverarbeitung nicht zur Speicherung von Daten verwendet wird; und wobei die Hilfs-Prozeßeinheit (24) weiterhin ein ROM (23) aufweist, das ein Programm mit Befehlen zum Empfangen und Übertragen von Daten enthält, und ausgestaltet ist, um zu bestimmen, ob auf den ungenutzten Bereich (27) des RAM (25) zur Aufnahme der Sicherungsdaten zugegriffen werden kann, und um in diesem Fall ein Steuersignal zu erzeugen, welches bewirkt, daß die Sicherungsdaten im ungenutzten Bereich (27) gespeichert werden.

3. Vorrichtung nach Anspruch 1 oder 2, dadurch gekennzeichnet, daß die Hilfs-Prozeßeinheit (24) weiterhin Einrichtungen enthält, um ein Fertig-Signal an die Zentraleinheit (10) auszugeben, wenn die Entscheidungseinrichtungen bestimmen, daß die Annahme möglich ist, und daß die Zentraleinheit (10) nach Empfang des Fertig-Signals die Sicherungsdaten an die Hilfs-Prozeßeinheit (24) leitet.

4. Vorrichtung nach den vorhergehenden Ansprüchen, dadurch gekennzeichnet, daß die Hilfs-Prozeßeinheit (24) Einrichtungen aufweist, um ein Busy-Signal an die Zentraleinheit (10) auszugeben, wenn die Entscheidungseinrichtungen bestimmen, daß eine Annahme nicht möglich ist.

5. Vorrichtung nach den vorhergehenden Ansprüchen, dadurch gekennzeichnet, daß die Hilfs-Prozeßeinheit (24) Einrichtungen enthält, um zu prüfen, ob die empfangenen Sicherungsdaten korrekt sind, und Einrichtungen zum Senden eines Wiederholungsbefehls an die Zentraleinheit (10), wenn die Prüfeinrichtungen bestimmen, daß die empfangenen Sicherungsdaten nicht korrekt sind, so daß die Zentraleinheit (10) die Sicherungsdaten noch einmal überträgt.

## Revendications

1. Appareil pour conserver des données de réserve dans un ordinateur (11), qui comprend :
une unité de traitement centrale (10),
un processeur de fonctions auxiliaires (16) incluant une unité de traitement auxiliaire (24) et une mémoire volatile (25) possédant une aire de travail (26) normalement utilisée par l'unité de traitement auxiliaire (24), et une zone inutilisée (27) qui, normalement, n'est pas utilisée par l'unité de traitement auxiliaire (24), le processeur de fonctions auxiliaire (16) étant connecté électriquement à l'unité de traitement centrale (10) pour recevoir et transmettre des données,
un dispositif périphérique (17) commandé par le processeur de fonctions auxiliaires (16), et
une batterie pour fournir de l'énergie de renfort à la mémoire volatile pendant que l'alimentation électrique principale est hors d'action,
caractérisé en ce que l'unité de traitement auxiliaires (24) comprend :
des moyens de détection pour détecter un ordre qui commande de conserver les données de réserve fournies par l'unité de traitement centrale (1O),
des moyens de décision pour décider si le processeur de fonctions auxiliaires peut recevoir les données de réserve,
des moyens de réception pour recevoir les données de réserve de l'unité de traitement centrale (10) quand les moyens de décision décident que cette réception est possible, et
des moyens de conservation pour conserver les données de réserve reçues par les moyens de réception dans la zone inutilisée (27) de la mémoire volatile (25).

2. Appareil selon la revendication 1, caractérisé en ce que la mémoire volatile (25) est une mémoire à accès sélectif (25) possédant une zone de travail (26) et une zone inutilisée (27) qui n'est normalement pas utilisée pour conserver des données pendant le traitement d'informations normales ; l'unité de traitement auxiliaire (24) comprenant aussi une mémoire morte (23) qui possède un programme comportant des instructions pour recevoir et transmettre des données, et qui est conçue pour déterminer si la zone inutilisée (27) de la mémoire à accès sélectif (25) peut servir à recevoir les données de réserve et si, dans l'affirmative, elle peut servir pour engendrer un signal de commande qui fait que les données de réserve sont transférées aux fins de stockage dans la zone inutilisée (27).

3. Appareil selon la revendication 1 ou 2, caractérisé en ce que l'unité de traitement auxiliaire comporte, en outre, des moyens pour délivrer un signal, indiquant qu'elle est prête, à l'unité de traitement centrale (10) quand les moyens de décision décident qu'une réception est possible, tandis que l'unité de traitement centrale (10) envoie les données de réserve à l'unité de traitement auxiliaire (24) après avoir reçu le signal indiquant qu'elle est prête.

4. Appareil selon l'une quelconque des revendications précédentes, caractérisé en ce que l'unité de traitement auxiliaire (24) comporte des moyens pour adresser un signal d'occupation à l'unité de traitement centrale (10) quand les moyens de décision décident qu'une réception n'est pas possible.

5. Appareil selon l'une quelconque des revendications précédentes, caractérisé en ce que l'unité de traitement auxiliaire (24) possède des moyens pour vérifier si les données de réserve reçues sont correctes, ainsi que des moyens pour envoyer un ordre de répétition à l'unité de traitement centrale (10) quand les moyens de vérification déterminent que les données de réserve reçues ne sont pas correctes, ce qui fait que l'unité de traitement centrale (10) transmet à nouveau les données de réserve.
